Europäisches Patentamt

European Patent Office

Office européen des brevets

(19)

(11) Numéro de publication: **0 036 353
B1**

(12) **FASCICULE DE BREVET EUROPEEN**

(45) Date de publication du fascicule du brevet:
**09.05.84**

(21) Numéro de dépôt: **81400333.1**

(22) Date de dépôt: **04.03.81**

(51) Int. Cl.³: **G 01 S 7/52**, G 01 S 15/89,
G 10 K 11/30

(54) **Sonde d'échographie ultrasonore à lentille acoustique, et échographe comportant une telle sonde.**

(30) Priorité: **07.03.80 FR 8005200**

(43) Date de publication de la demande:
**23.09.81 Bulletin 81/38**

(45) Mention de la délivrance du brevet:
**09.05.84 Bulletin 84/19**

(84) Etats contractants désignés:
**DE GB NL**

(56) Documents cités:
**EP - A - 0 000 068
FR - A - 2 222 658
FR - A - 2 252 580
FR - A - 2 275 771
FR - A - 2 410 276
SU - A - 179 076
US - A - 3 168 659
US - A - 4 084 582**

(73) Titulaire: **CGR ULTRASONIC, 9, Chaussée de Paris,
F-77102 Villenoy-les-Meaux (FR)**

(72) Inventeur: **Dory, Jacques, THOMSON-CSF SCPI 173, bld
Haussmann, F-75360 Paris Cedex 08 (FR)**

(74) Mandataire: **Barbin le Bourhis, Joel, THOMSON-CSF
SCPI 173, boulevard Haussmann, F-75379 Paris
Cedex 08 (FR)**

## Description

L'invention concerne une sonde d'échographie ultrasonore à lentille acoustique déformable, elle concerne également un échographe comportant une telle sonde.

Dans l'art antérieur, on utilise couramment des sondes à focalisation fixe, obtenue en donnant au transducteur piézo-électrique qui constitue l'organe émetteur/récepteur de la sonde la forme d'une coupelle, ou encore en associant à un transducteur piézo-électrique plat une lentille acoustique. Dans cette technique, la profondeur de champ doit nécessairement être relativement grande afin de pouvoir obtenir une étendue suffisante de la surface explorée.

En effet, en échographie, l'image est formée à partir des points de l'objet situés dans un plan passant par l'axe de visée. Cela conduit à utiliser une ouverture numérique relativement faible et il en résulte que la tache focale est relativement large.

Par ailleurs, il est aussi connu d'utiliser une lentille acoustique du type constitué par une chambre contenant un liquide et dont une face est déformable, la distance focale n'est pas connue avec précision et les réglages éventuels sont délicats et très instables, compte tenu notamment des fuites de liquide et des effets de la température sur le volume du liquide. A titre d'exemple, le document du brevet soviétique SU-A N° 179076 décrit un tel système où la pression de liquide est ajustée par une capsule en communication avec la chambre et sur laquelle agit un piston.

Une autre technique connue consiste à utiliser des sondes annulaires à éléments transducteurs multiples pour régler la focalisation en introduisant des retards réglables et différents entre chaque élément et les circuits d'émission et de réception. Cette technique fait l'objet de la demande de brevet français FR-A N° 2252580, déposée le 22.11.73 par la titulaire pour: «Appareil de sondage par impulsions acoustiques avec focalisation variable du faisceau de sondage.» Le document du brevet européen EP-A N° 0000068 donne un enseignement analogue.

La technologie de telles sondes devient très délicate dès que l'on désire obtenir de grandes ouvertures numériques, car le nombre d'éléments annulaires croît en fonction de l'ouverture numérique désirée et le découplage mécanique entre les éléments devient rapidement très difficile à réaliser, tandis que les retards doivent prendre des valeurs considérables.

Un premier but de l'invention est de permettre la réalisation d'une sonde à lentille acoustique déformable dont la distance focale pourra être réglée avec précision dans de larges limites et maintenue à des valeurs stables.

A cet effet, l'invention concerne principalement une sonde d'échographie ultrasonore à lentille acoustique déformable comportant un transducteur piézo-électrique principal associé à une lentille acoustique constituée par une chambre remplie d'un liquide et ayant une première face délimitée par la face active du transducteur, une seconde face courbe, constituée par une membrane déformable, et un moyen pour faire varier la pression du liquide sur la membrane, caractérisée en ce qu'elle comporte un moyen électro-acoustique de mesure de l'épaisseur de la lentille par réflexion d'impulsions ultrasonores; et un moyen pour comparer le signal de mesure d'épaisseur engendré par ledit moyen électro-acoustique avec un signal représentatif d'une valeur de consigne pour engendrer un signal d'écart qui constitue un signal de commande dudit moyen pour faire varier la pression du liquide sur la membrane.

Un autre but de l'invention est la réalisation d'une sonde à très grande ouverture numérique et à focalisation réglable, apte à permettre d'effectuer le compromis optimal entre la profondeur de champ et la résolution latérale.

Suivant un mode d'exécution préféré, une telle sonde est caractérisée en ce que le transducteur principal comporte une pluralité d'éléments piézo-électriques électriquement isolés et acoustiquement indépendants les uns des autres, associés de façon à former une surface active commune qui constitue la première face de la lentille, de façon que le récepteur principal associé audit transducteur soit relié à ses différents éléments par l'intermédiaire de circuits de pondération, de phase et d'amplitude réglables indépendamment les uns des autres et que des moyens sont prévus pour effectuer le réglage programmé de ces circuits et de ladite valeur de consigne.

D'autres caractéristiques, ainsi que les avantages de l'invention, apparaîtront clairement à la lumière de la description détaillée ci-après.

Au dessin annexé:

la fig. 1 représente schématiquement un dispositif d'échographie utilisant une sonde conforme à un premier mode d'exécution de l'invention, et

la fig. 2 est une représentation schématique partielle d'un dispositif d'échographie utilisant une sonde conforme à un second mode d'exécution.

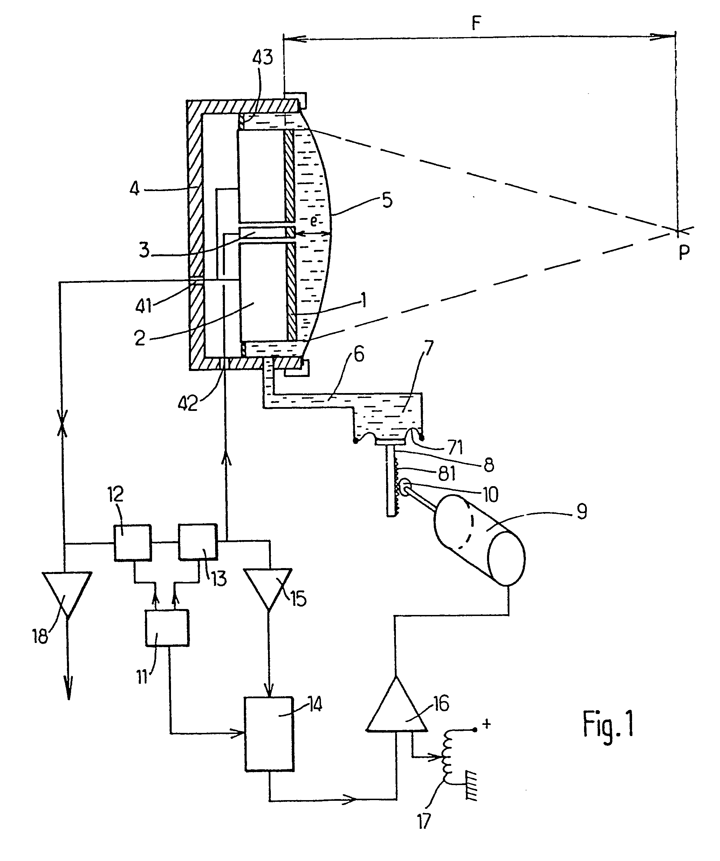

A la fig. 1, on a représenté une sonde acoustique constituée par un transducteur céramique annulaire 1, solidaire d'un bloc annulaire 2 destiné à l'amortissement des oscillations ultrasonores émises par le transducteur. La cavité cylindrique commune aux deux éléments annulaires concentriques 1 et 2 loge un transducteur céramique auxiliaire 3. L'ensemble est monté à l'intérieur d'un boîtier 4, dont la paroi arrière est munie d'orifices 41-42 pour le passage des conducteurs de liaison avec les circuits du dispositif et dont la paroi avant est constituée par une membrane élastique 5 transparente aux ultrasons. La partie avant du boîtier jusqu'à un joint d'étanchéité 43 est remplie d'un liquide dans lequel les ultrasons se propagent à une vitesse C1 différente de la vitesse de propagation C2 dans le milieu extérieur.

Ce liquide forme, entre la surface d'émission des transducteurs 1 et 3 et la surface de la membrane 5, une lentille déformable qui, dans le mode d'exécution décrit, est du type plan-convexe. En prenant C1 < C2, on obtient ainsi une focalisation des faisceaux émis par les deux transducteurs respectifs, en un point P situé à une distance F du plan des surfaces émettrices.

La partie avant du boîtier 4 est réunie par une canalisation 6 à une capsule 7 terminée par une membrane élastique 71, sur laquelle agit un piston 8 commandé par un moteur électrique 9, par l'intermédiaire d'un galet 10 coopérant avec une crémaillère 81 dont est munie la tige du piston.

Les circuits électriques du dispositif comprennent un générateur d'horloge 11 qui synchronise deux émetteurs d'impulsions 12, 13 et un circuit de mesure 14.

L'émetteur 13 excite le transducteur 3 et les échos obtenus après réflexion des ultrasons émis sur la membrane 5 sont envoyés à un amplificateur 15 qui les transmet au circuit de mesure 14. Ce dernier est agencé pour fournir une tension continue proportionnelle à l'intervalle de temps qui sépare l'émission de l'impulsion par le transducteur 3 de sa réflexion par la membrane, donc à la distance e entre le plan d'émission et le centre au sommet de la membrane.

La réalisation du circuit de mesure 14 est à la portée de l'homme du métier. Il peut, par exemple, comprendre un générateur d'une tension en dents de scie, le début de la rampe de chaque dent de scie étant synchronisée sur la réception de l'écho (amplificateur 15), et un détecteur de crête fournissant la tension de crête de la rampe, laquelle est proportionnelle à sa durée.

La sortie du circuit 14 est reliée à une entrée d'amplificateur différentiel 16 dont l'autre entrée reçoit une tension continue de consigne fournie par un potentiomètre 17. La tension d'écart, présente à la sortie de l'amplificateur différentiel 16, commande le moteur 9, lequel est agencé, de façon connue en soi, pour effectuer une rotation d'amplitude proportionnelle à la tension de commande, dans un sens qui dépend du signe de cette tension.

Le déplacement du piston dans un sens ou dans l'autre aura pour effet de modifier la pression exercée sur la membrane par le liquide contenu dans la lentille déformable, donc la distance e. Or, la distance focale F dépend de l'épaisseur e de la lentille. On dispose alors d'un moyen de réglage de e, donc de la distance focale F de la lentille. Ce réglage peut évidemment s'effectuer à distance.

En cas de variation de la température ambiante, de fuite de liquide, de variation accidentelle de la distance e ou pour toute autre cause, la chaîne d'asservissement constituée par les organes 3, 15, 14, 16, 17, 9, 7, 6, ..., maintient la distance e à la valeur de consigne choisie.

L'émetteur d'impulsions 12 excite le transducteur 1 et les échos résultant de la réflexion des ultrasons émis au sein du milieu examiné sont transmis, par un amplificateur 18, à un circuit classique de traitement et d'exploitation de l'information contenue dans ces échos.

Il est évident que le moyen de faire varier la pression du liquide décrit et représenté à la fig. 1 pourrait faire l'objet de variante, le moteur pouvant par exemple commander un vérin de réglage de la pression exercée par le liquide.

Les deux faces de la lentille pourraient être constituées par des membranes déformables et la distance entre les deux faces pourrait être mesurée ailleurs qu'au centre.

On pourrait, par ailleurs, envisager, à titre de variante, de repérer la position de la membrane 5 au moyen d'échos obtenus à partir des impulsions émises par le transducteur principal 1.

Toutefois, le mode d'exécution décrit présente l'avantage de permettre un repérage particulièrement précis, effectué sur l'épaisseur maximale de la lentille. Si on le désire et à titre de variante, la fréquence d'émission pourra être indépendante de celle de l'émission principale. La fréquence porteuse d'émission, c'est-à-dire la haute fréquence des oscillations de l'émetteur 13, pourra par exemple être de 10 à 20 MHz, pour une fréquence d'émission de 3 à 5 MHz de l'émetteur 12.

On notera que la focalisation obtenue au moyen du dispositif de la fig. 1 n'est, en général, pas parfaite, surtout pour les fortes ouvertures relatives, du fait que, la membrane présentant une épaisseur uniforme, elle prend, sous l'effet de la pression du liquide, la forme d'une calotte sphérique, alors que la forme idéale de focalisation est l'hyperboloïde de révolution. Pour corriger les aberrations qui en résultent, on pourrait envisager d'utiliser une membrane d'épaisseur non uniforme, mais le calcul de la loi de variation d'épaisseur serait complexe et la correction ne serait rigoureuse que pour une focalisation donnée.

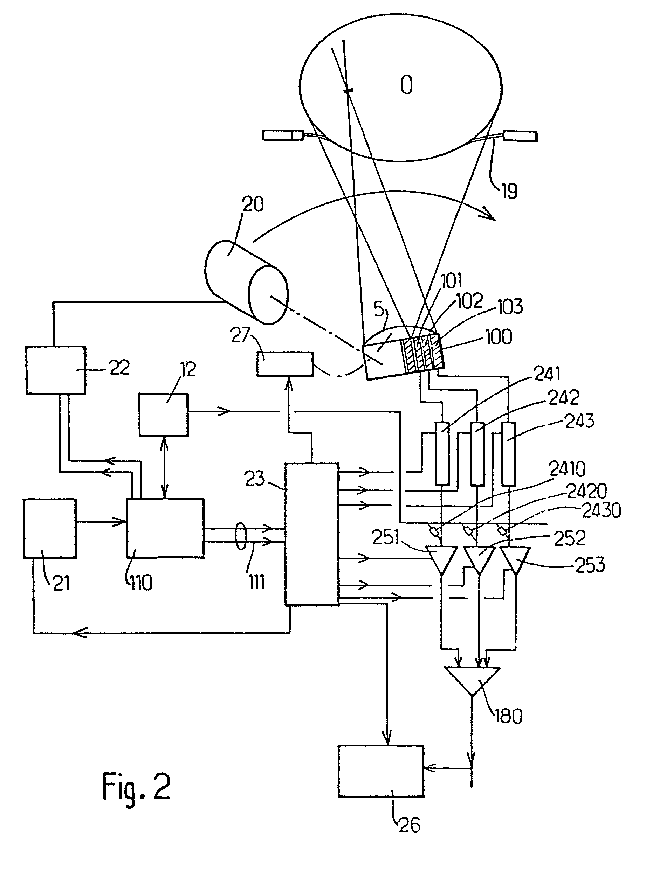

Il est plus avantageux d'utiliser la variante de la fig. 2, qui fait application, pour obtenir une correction, d'un transducteur à éléments multiples associé à des circuits de pondération de temps et d'amplitude indépendants, comme on va maintenant l'expliquer.

On n'a représenté à la fig. 2 que la partie des circuits du dispositif qui correspond au transducteur principal, désigné par 100 et associé à la membrane 5 pour constituer une lentille. Le reste du dispositif est réalisé conformément à la fig. 1, c'est-à-dire que le transducteur 100 est logé dans un boîtier et forme avec la membrane 5 une chambre remplie d'un liquide de couplage, de façon à constituer une lentille convergente, et que cette chambre est en communication avec un organe de réglage de la pression du liquide, lui-même asservi par des signaux fournis par un circuit de mesure de l'épaisseur de la lentille, circuit qui comporte un transducteur auxiliaire de mesure.

A la fig. 2, le dispositif complet de réglage de la forme de la lentille a été symbolisé par un rectangle 27, relié à la lentille 5 par une ligne en trait mixte.

Dans la variante de la fig. 2, le transducteur principal 100 est de préférence réalisé sous la forme d'une pluralité d'anneaux concentriques, par exemple une dizaine, tels que 101, 102, 103 électriquement isolés les uns des autres, acoustiquement indépendants, tout en étant mécaniquement solidaires d'un même support, de façon que leurs surfaces actives soient dans un même plan qui constitue la face plane de la lentille. La description d'un tel transducteur à éléments multiples est donnée dans le brevet français susvisé.

Le faisceau issu du transducteur 100 est soit soumis à un balayage angulaire soit par action directe sur le transducteur 100, soit par association du dispositif de commande de balayage avec un miroir oscillant, comme cela est décrit par exemple dans la demande de brevet français FR-A No 2410276 déposée le 23.11.77 par la titulaire pour: «Appareil d'examen échographique à miroir oscillant destiné au diagnostic médical.»

On a symbolisé par un moteur 20 relié au transducteur 100 par une ligne en trait mixte et par un circuit 22 générateur d'une tension de commande appropriée, le dispositif de commande de balayage.

L'ensemble (100-5) est immergé dans une chambre contenant un liquide de couplage tel que l'eau, choisi pour que la vitesse de propagation des ultrasons y soit telle qu'il ne supprime pas l'effet de focalisation du faisceau par la lentille déformable. On n'a figuré au dessin que la membrane souple 19, transparente aux ultrasons, qui ferme la chambre de couplage sur la face de sortie du faisceau.

L'objet O à examiner, en l'occurence une partie du corps d'un patient, est appliqué contre la membrane 19, une pellicule de liquide de couplage étant de préférence interposée entre la peau et la membrane 19.

Un générateur d'horloge 21 pilote un circuit de synchronisation 110 qui fournit, d'une part, les impulsions de synchronisation nécessaires à l'émetteur principal 12, d'autre part, des impulsions de commande du circuit 22, lequel est agencé pour alimenter le moteur 20 de façon telle que le faisceau d'ultrasons émis par le transducteur 100 soit soumis, à chaque cycle d'émission, à un balayage angulaire suivant un angle déterminé. La réalisation d'un tel circuit est décrite dans la demande de brevet susvisée.

Le circuit de synchronisation 110 fournit encore, par l'intermédiaire d'un bus 111, des instructions à un circuit 23 agencé pour fournir des signaux de programmation de lignes à retard, telles que 241 à 243, et de préamplificateurs à gain programmable, tels que 251 à 253. Enfin, il fournit au dispositif 27 un signal de réglage de l'effet principal de focalisation.

Les lignes à retard, à raison d'une par élément annulaire du transducteur 100, transmettent à ces éléments les signaux fournis par l'émetteur 12, à travers des cellules antiretour symbolisées par de petits rectangles 2410, 2420 et 2430. Ces cellules constituées, comme on l'a expliqué dans le document du brevet FR-A No 2252580 susvisé, par des diodes montées tête-bêche, empêchent l'application des signaux de réception à l'émetteur 12.

Les préamplificateurs 251 à 253, en nombre égal à celui des éléments annulaires du transducteur 100, ont leurs sorties reliées à l'entrée d'un amplificateur/sommateur de réception 180, dont la sortie est reliée à une mémoire 26.

En fonctionnement, les signaux issus de l'émetteur principal 12 étant appliqués aux éléments respectifs du transducteur 100 avec des retards différents et, éventuellement, une pondération d'amplitude convenablement programmés par le circuit 23, il en résulte un premier effet de focalisation programmable du faisceau ultrasonore émis par le transducteur 100. Ces retards à l'émission peuvent éventuellement être omis.

A la réception, les signaux d'échos subissent également des retards pondérés dans les lignes à retard et, en outre, une pondération d'amplitude dans les préamplificateurs 251 à 253. On a pu montrer que cette pondération d'amplitude permet, d'une part, d'améliorer la forme du diagramme de réception en réduisant ses lobes secondaires, d'autre part, de modifier l'ouverture relative du transducteur 100, pour changer le rapport entre la profondeur de champ I et le diamètre de la tache focale d.

d et I sont liés par la relation $d^2/I = f \cdot k$, f étant la fréquence d'émission. Il en résulte que, si l'on veut avoir une image très nette (d faible), la profondeur de champ sera très réduite, et réciproquement. On peut alors avoir intérêt à effectuer un premier examen global avec une grande profondeur (mais une faible netteté), afin d'obtenir une vue d'ensemble de l'objet, pour revenir ensuite sur une zone intéressante, en choisissant d'avoir une faible profondeur de champ, mais une grande netteté.

Ces résultats sont obtenus, très simplement, à l'aide du dispositif décrit, en modifiant le programme de réglage des gains des préamplificateurs 251 à 253 et le réglage du dispositif 27.

En ce qui concerne le programme de réglage des lignes à retard, il convient de faire observer qu'il n'est destiné qu'à réaliser une simple correction des aberrations de l'effet de focalisation principal, lequel est fourni, comme dans le mode d'exécution de la fig. 1, par la lentille déformable 5 et le circuit 17 qui lui est associé.

On aurait pu songer à réaliser entièrement l'effet de focalisation au moyen du transducteur à éléments multiples 100 associé aux lignes à retard 241 à 243. Toutefois, pour une ouverture relative du transducteur 100 de l'ordre de 0,5, cette solution conduit à la réalisation d'un transducteur comportant au moins une centaine d'éléments et à l'application de retards importants. C'est pourquoi le dispositif décrit propose d'effectuer le réglage principal au moyen d'une lentille déformable associée à un circuit d'asservissement de la position de la membrane qu'elle comporte, et d'utiliser le transducteur à éléments multiples uniquement pour obtenir des variations faibles destinées à corriger les aberrations de la lentille déformable. Un petit nombre d'éléments est alors suffisant et le transducteur 100 est facile à réaliser.

Le circuit 23 permet de modifier les programmes de réglage des retards, des gains, de la valeur de consigne imposée par le circuit 27, de la vitesse et de l'amplitude du balayage imposés par le circuit 22, en fonction de l'application envisagée.

Il est possible de l'agencer pour obtenir plusieurs réglages successifs de la focalisation correspondant à l'obtention d'images successives de plusieurs zones distinctes de l'objet à examiner, le passage d'une zone à l'autre pouvant être obtenu très rapidement, plusieurs fois par seconde, et de façon automatique. Les signaux d'échos seront alors inscrits dans des zones distinctes de la mémoire 26, en vue de leur exploitation globale, donc de la formation d'une image unique au point à toutes les profondeurs.

Les circuits de pondération de temps et d'amplitude permettent également de déplacer, dans une plage limitée, la position de la tache focale autour d'une valeur moyenne et, éventuellement, de réaliser dans cette zone, à la réception, une focalisation dynamique telle que décrite dans le document du brevet FR-A No 2252580.

**Revendications**

1. Sonde d'échographie ultrasonore à lentille acoustique déformable comportant un transducteur piézo-électrique principal (1) associé à une lentille acoustique constituée par une chambre remplie d'un liquide et ayant une première face délimitée par la face active du transducteur (1), une seconde face courbe constituée par une membrane (5) déformable, et un moyen (7) pour faire varier la pression du liquide sur la membrane (5), caractérisée en ce qu'elle comporte un moyen électro-acoustique (3) de mesure de l'épaisseur de la lentille par réflexion d'impulsions ultrasonores, et un moyen (16) pour comparer le signal de mesure d'épaisseur engendré par ledit moyen (3) électro-acoustique avec un signal représentatif d'une valeur de consigne pour engendrer un signal d'écart qui constitue un signal de commande dudit moyen (7) pour faire varier la pression du liquide sur la membrane (5).

2. Sonde selon la revendication 1, caractérisée en ce que ledit transducteur (1) est annulaire et en ce que ledit moyen électro-acoustique comprend un transducteur (3) piézo-électrique auxiliaire logé dans l'orifice central du transducteur principal (1) et un émetteur auxiliaire (13) d'impulsions ultrasonores, associé à un récepteur d'échos (14, 15), fournissant un signal de mesure de l'épaisseur de la lentille en son sommet.

3. Sonde selon l'une des revendications 1 ou 2, caractérisée en ce que ledit moyen pour faire varier la pression comprend une capsule (7) en communication avec ladite chambre et fermée par une membrane élastique (71) sur laquelle agit un piston (8) commandé par un moteur (9) électrique, par l'intermédiaire d'un galet (10) coopérant avec une crémaillère (81) dont est munie la tige du piston.

4. Sonde selon l'une des revendications 2 ou 3, caractérisée en ce que ledit émetteur auxiliaire (13) a une fréquence porteuse sensiblement plus élevée que la fréquence porteuse d'excitation du transducteur principal (1).

5. Sonde selon l'une des revendications 1 à 4, caractérisée en ce que ledit transducteur principal comporte une pluralité d'éléments piézo-électriques (100, 101, 102, 103) électriquement isolés et acoustiquement indépendants les uns des autres, associés de façon à former une surface active commune qui constitue la première face de la lentille, en ce qu'un amplificateur sommateur de réception (180), associé audit transducteur, est relié à ses différents éléments par l'intermédiaire de circuits de pondération de phase (241, 242, 243) et d'amplitudes (251, 252, 253) réglables indépendamment les uns des autres, et en ce que des moyens (23) sont prévus pour effectuer le réglage programmé de ces circuits et de ladite valeur de consigne.

6. Sonde suivant la revendication 5, caractérisée en ce que lesdits éléments piézo-électriques sont annulaires.

7. Sonde selon l'une des revendications 5 ou 6, caractérisée en ce que ledit moyen (23) de réglage programmé est agencé pour obtenir successivement une pluralité de valeurs de la distance de focalisation et de la profondeur de champ de la sonde, et une pluralité correspondante de zones successives de balayage de l'objet exploré, un organe de mémoire (26) étant prévu pour enregistrer les résultats de l'examen dans lesdites zones successives.

8. Echographe, caractérisé en ce qu'il comporte une sonde selon l'une des revendications précédentes.

**Claims**

1. Ultrasonic echograph probe with deformable acoustic lens comprising a piezo-electric main transducer (1) associated with an acoustic lens formed by a chamber filled with liquid and having a first face delimited by the active face of the transducer (1), a second curved face formed by a deformable membrane (5), and a means (7) for varying the pressure of the liquid on the membrane (5), characterized in that it comprises an electroacoustic means (3) for measuring the thickness of the lens by reflection of ultrasonic pulses, and a means (16) for comparing the thickness measurement signal produced by said electroacoustic means (3) with a signal representing a set value for producing a deviation signal which constitutes a control signal of said means (7) for varying the pressure of the liquid on the membrane (5).

2. Probe according to claim 1, characterized in that said transducer (1) is annular and said electroacoustic means comprises an auxiliary piezo-electric transducer (3) accommodated in the central orifice of the main transducer (1) and an auxiliary transmitter (13) of ultrasonic pulses associated with an echo receiver (14, 15) supplying a measurement signal for the thickness of the lens in its apex.

3. Probe according to one of claims 1 or 2, characterized in that said means for varying the pressure comprises a capsule (7) in communication with said chamber and closed by a resilient membrane (71) on which acts a piston (8) controlled by an electric motor (9) by way of a wheel (10) co-operating with a rack (51) with which the piston rod is provided.

4. Probe according to one of claims 2 or 3, characterized in that said auxiliary transmitter (13) has a carrier frequency substantially greater than the excitation carrier frequency of the main transducer (1).

5. Probe according to one of claims 1 to 4, characterized in that said main transducer comprises a plurality of piezo-electric elements (100, 101, 102, 103) electrically insulated and acoustically independent of each other and associated so as to form a common active surface which forms the first face of the lens, that a reception summation amplifier (180) associated with said transducer is connected to the different elements thereof by way of phase weighting circuits (241, 242, 243) and amplitude weighting circuits (251, 252, 253) adjustable independently of each other, and that means (23) are provided for effecting the programmed adjustment of said circuits and of said set value.

6. Probe according to claim 5, characterized in that said piezo-electric elements are annular.

7. Probe according to one of claims 5 or 6, characterized in that said means (23) for programmed adjustment is designed to obtain successively a plurality of values of the focal length and the depth of field of the probe, and a corresponding plurality of successive zones of the scanning of the object investigated, a memory member (26) being provided to record the results of the examination in said successive zones.

8. Echograph, characterized in that it comprises a probe according to one of the preceding claims.

## Patentansprüche

1. Ultraschall-Echogaph-Sonde mit deformierbarer akustischer Linse, enthaltend: einen piezoelektrischen Hauptwandler (1), der einer akustischen Linse zugeordnet ist, die aus einer flüssigkeitsgefüllten Kammer gebildet ist und eine erste Fläche aufweist, die durch die aktive Fläche des Wandlers (1) begrenzt ist, sowie eine zweite, gekrümmte Fläche aufweist, die durch eine deformierbare Membran (5) gebildet ist, und eine Einrichtung (7) zum Verändern des auf die Membran (5) einwirkenden Flüssigkeitsdruckes, dadurch gekennzeichnet, dass sie eine elektroakustische Einrichtung (3) zur Messung der Dicke der Linse durch Reflexion von Ultraschallimpulsen und eine Einrichtung (16) zum Vergleichen des Dickemesssignals, das von der elektroakustischen Einrichtung (3) erzeugt wird, mit einem Signal umfasst, welches einen Sollwert darstellt, um ein Abweichungssignal zu erzeugen, das ein Steuersignal für die Einrichtung (7) bildet, die den auf die Membran (5) einwirkenden Flüssigkeitsdruck verändert.

2. Sonde nach Anspruch 1, dadurch gekennzeichnet, dass der Wandler (1) ringförmig ist und die elektroakustische Einrichtung einen piezoelektrischen Hilfswandler (3) umfasst, der in der zentralen Öffnung des Hauptwandlers (1) aufgenommen ist, und einen Hilfssender (13) für Ultraschallimpulse umfasst, der einem Echoempfänger (14, 15) zugeordnet ist, welcher ein Messsignal für die Dicke der Linse in ihrem Scheitel liefert.

3. Sonde nach einem der Ansprüche 1 oder 2, dadurch gekennzeichnet, dass die Einrichtung zum Verändern des Druckes eine Kapsel (7) umfasst, die mit der Kammer in Verbindung und durch eine elastische Membran (71) geschlossen ist, auf die ein Kolben (8) einwirkt, welcher durch einen Elektromotor (9) über ein Rädchen (10) gesteuert wird, das mit einer Zahnstange (51) zusammenwirkt, mit der die Kolbenstange ausgerüstet ist.

4. Sonde nach einem der Ansprüche 2 oder 3, dadurch gekennzeichnet, dass der Hilfssender (13) eine Trägerfrequenz aufweist, die beträchtlich höher als die Anregungsträgerfrequenz des Hauptwandlers (1) ist.

5. Sonde nach einem der Ansprüche 1 bis 4, dadurch gekennzeichnet, dass der Hauptwandler eine Mehrzahl von piezoelektrischen Elementen (100, 101, 102, 103) umfasst, die elektrisch isoliert und akustisch voneinander unabhängig sowie einander derart zugeordnet sind, dass sie eine gemeinsame aktive Oberfläche bilden, die die erste Fläche der Linse bildet, dass ein Empfangssummierverstärker (180), der diesem Wandler zugeordnet ist, an dessen verschiedene Elemente über Phasenwichtungskreise (241, 242, 243) und Amplitudenwichtungskreise (251, 252, 253) angeschlossen ist, die unabhängig voneinander einstellbar sind, und dass Mittel (23) vorgesehen sind, um die programmierte Einstellung dieser Kreise und des genannten Sollwertes vorzunehmen.

6. Sonde nach Anspruch 5, dadurch gekennzeichnet, dass die piezoelektrischen Elemente ringförmig sind.

7. Sonde nach einem der Ansprüche 5 oder 6, dadurch gekennzeichnet, dass die Mittel (23) zur programmierten Einstellung so ausgebildet sind, dass nacheinander eine Mehrzahl von Werten der Brennweite und der Tiefenschärfe der Sonde und eine entsprechende Mehrzahl von aufeinanderfolgenden Zonen der Abtastung des erforschten Objektes erhalten wird, wobei ein Speicherorgan (26) vorgesehen ist, um die Untersuchungsergebnisse in den aufeinanderfolgenden Zonen aufzuzeichnen.

8. Echograph, dadurch gekennzeichnet, dass er eine Sonde nach einem der vorstehenden Ansprüche enthält.

Fig.1

Fig. 2